# FASCICULE DE BREVET EUROPEEN

(11) **EP 2 945 883 B1**
(45) Date de publication et mention de la délivrance du brevet: **17.04.2019**
(21) Numéro de dépôt: 14700473.3
(22) Date de dépôt: 14.01.2014
(51) Int. Cl.: B65D 83/54

(54) **VALVE DOSEUSE**
DOSIERVENTIL
METERING VALVE

(30) Priorité: 15.01.2013 FR 1350343
(43) Date de publication de la demande: 25.11.2015
(73) Titulaire: Lindal France SAS, 54150 Briey (FR)
(72) Inventeur: BODET, Hervé, F-55100 Verdun (FR); GAILLARD, Eric, F-55320 Dieue sur Meuse (FR)
(74) Mandataire: Vièl, Frédérique
(86) Numéro de dépôt international: PCT/EP2014/050548
(87) Numéro de publication internationale: WO 2014/111362

(56) Documents cités:
- EP-A1- 0 307 127
- WO-A2-2004/041340
- AT-B- 388 715
- FR-A5- 2 076 684
- GB-A- 2 050 303
- JP-U- H0 614 081
- US-A- 3 040 936
- US-A- 3 104 785
- US-A- 3 235 135

## Description

L'invention concerne une valve doseuse pour récipient aérosol, présentant une face interne destinée à être placée à l'intérieur du récipient aérosol et une face externe destinée à être placée hors du récipient aérosol. La valve est munie d'un corps de valve présentant une chambre interne pouvant être mise en contact soit avec la face interne de la valve, soit avec la face externe de la valve, d'une tige munie de moyens de fermeture et placée en partie à l'intérieur de la chambre interne mobile entre deux positions, à savoir une position fermée dans laquelle la chambre interne est en contact avec la face interne de la valve, mais isolée de la face externe de la valve, et une position ouverte dans laquelle la chambre interne est en contact avec la face externe de la valve, mais isolée de la face interne de la valve, et d'un réservoir (R) pouvant être rempli lorsque la tige est en position fermée et vidé lorsque la tige est en position ouverte.

Il existe plusieurs sortes de valves doseuses pour aérosol selon si la pression est exercée par un gaz liquide ou un gaz sous pression. Lorsque le gaz est liquide, il est mélangé au produit. En position fermée de la valve, le produit pénètre dans une chambre de dosage de volume souhaité. Lorsque la valve est ouverte, la chambre de dosage est isolée du récipient sous pression et mise en contact avec l'air ambiant. Le gaz liquide contenu dans le produit se détend et provoque l'expulsion du produit sous forme de spray. Si la pression est exercée par un gaz sous pression, il est nécessaire de vider mécaniquement le réservoir. Cela peut être réalisé par exemple à l'aide d'un ressort qui repousse le fond du réservoir vers la sortie. Un exemple d'une telle valve doseuse est connu par exemple de FR 2 740 527. Elle a pour inconvénient de nécessiter de nombreuses pièces donc certaines sont mobiles et risquent de se coincer.

Une autre solution consiste à réaliser le réservoir dans un matériau élastique. Lorsque la tige est en position fermée, le produit rentre dans le réservoir en le déformant élastiquement. Lorsque la tige est enfoncée, la membrane élastique n'est plus soumise à la pression régnant dans le récipient. Elle se rétracte en retournant à sa forme initiale et expulse ainsi le produit. Le choix des matériaux pour de telles poches est très restreint. Pratiquement seuls les élastomères peuvent être envisagés. Cependant, ils ne sont pas compatibles avec toutes les solutions. Notamment, ils sont incompatibles avec les solutions contenant de l'alcool, des parfums ou d'autres additifs. La société Mitani commercialise sous la dénomination MKP une telle valve. Celle-ci est constituée d'un corps de valve avec une chambre interne, d'une tige, d'un insert placé autour de la tige et d'une membrane cylindrique élastique placée entre l'insert et le corps de valve. L'extrémité inférieure de la tige ferme l'ouverture d'entrée de la chambre interne lorsqu'elle est en position fermée. Pour assurer l'étanchéité, l'extrémité inférieure de la membrane sert de joint entre l'extrémité inférieure de la tige et l'ouverture de passage. Lorsque la valve est fermée, le produit entre sous pression dans la chambre interne et gonfle la membrane élastique. Quand la valve est ouverte, la chambre interne est mise à pression atmosphérique et la membrane élastique se dégonfle en expulsant le volume correspondant hors de la valve. On connaît de telles valves de US4858790, WO2004/041340, US3040936, DE388715, JPH0614081U, GB2050303, US3104785, FR2076684 et US3235135.

L'objectif de l'invention est de concevoir une valve doseuse simple et fiable. Un autre objectif est de pouvoir choisir des matériaux compatibles avec un grand nombre de solutions, notamment les solutions contenant de l'alcool. Le volume du réservoir doit pouvoir être choisi dans une grande gamme en fonction des besoins.

Cet objectif est atteint avec la valve divulguée par la revendication 1. Selon l'invention le réservoir est situé du côté de la face interne de la valve, hors du corps de valve, en ce que le réservoir étant en contact avec la chambre interne du corps de valve, et du fait que le réservoir étant constitué d'au moins une membrane souple.

Le réservoir de l'invention se situe donc à l'abri à l'intérieur du récipient, hors de portée de l'utilisateur. Il est cependant soumis à la pression régnant à l'intérieur du récipient. De plus, le réservoir de l'invention est exempt de pièce mobile. Seule la membrane souple se déforme lors du remplissage ou de l'expulsion de la dose. La pression régnant dans le récipient suffit soit à remplir le réservoir lorsque la valve est fermée, soit à vider le réservoir en appuyant sur la membrane souple.

Selon l'invention le réservoir est constitué d'une paroi rigide sur laquelle est fixée la membrane souple. La face de la paroi rigide dirigée vers la membrane souple et/ou la face de la membrane souple dirigée vers la paroi rigide peuvent présenter une cavité.

La paroi rigide peut faire partie intégrante du corps de valve ou au contraire constituer une pièce distincte du corps de valve.

Pour éviter la formation de poches isolées, il est préférable de prévoir des rainures dans la face de la paroi rigide dirigée vers la membrane souple et/ou dans la face de la membrane souple dirigée vers la paroi rigide.

Pour assurer un vidage complet du réservoir, on peut donner à la membrane souple la forme inverse de la paroi rigide. Ainsi, sous la pression régnant dans le récipient, la membrane viendra s'écraser exactement contre le fond de la cavité de la paroi rigide.

Il n'est pas indispensable que la membrane souple soit élastique. Le choix des matériaux envisageable est alors très important. On peut notamment utiliser des laminés d'aluminium tels que ceux utilisés pour les poches souples dans les valves à poche. La membrane peut être réalisée dans un film mono matière ou un film complexe multicouches, avec ou sans aluminium.

Pour assurer l'étanchéité de la chambre interne vis-à-vis de l'intérieur du récipient, il est possible de placer les moyens de fermeture de la tige sur un embout formant une pièce distincte de la tige, les moyens de fermeture isolant la chambre interne de la face interne de la valve lorsque la tige est en position ouverte, et mettant en contact la chambre interne et la face interne de la valve lorsque la tige est en positon fermée. Cette solution permet d'utiliser des tiges courantes pour les valves doseuses de l'invention. Plus précisément, la chambre interne et la face interne de la valve peuvent être en contact via une ouverture de passage, et les moyens de fermeture de l'embout peuvent être constitués par une aiguille dimensionnée pour pénétrer dans l'ouverture de passage lorsque la tige est en position ouverte en fermant de façon étanche l'ouverture de passage.

La communication entre le réservoir et la chambre interne peut être assurée par un canal de communication prévu dans le corps de valve pour relier l'intérieur du réservoir et la chambre interne, ledit canal de communication débouchant dans la chambre interne de préférence à proximité de l'ouverture de passage.

L'invention est décrite plus en détail à l'aide des figures suivantes qui montrent un exemple de réalisation.

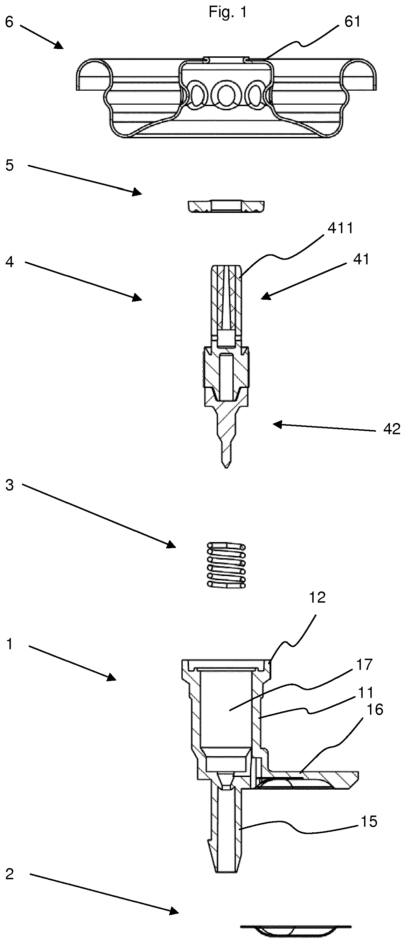

- Figure 1 :: une vue éclatée en coupe de la valve ;
- Figure 2 :: une vue en coupe de la valve en position fermée ;
- Figure 3 :: une vue en coupe de la valve en position ouverte ;

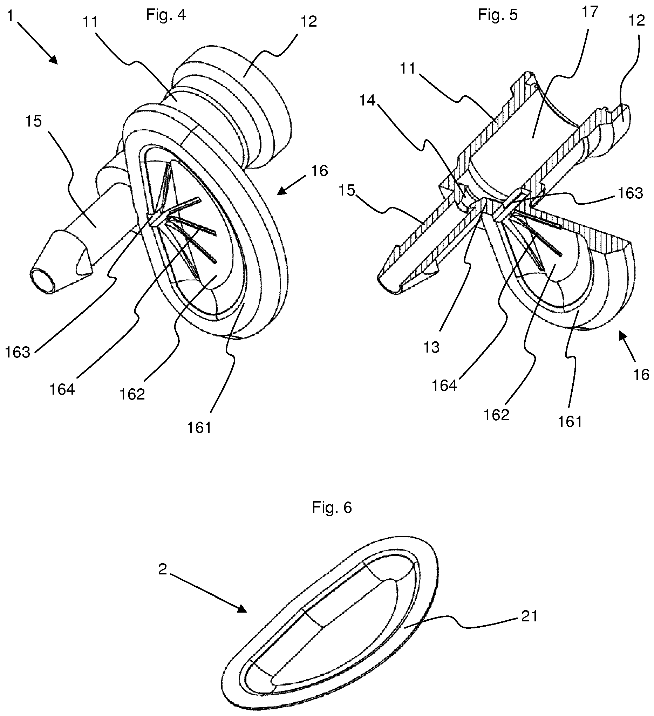

- Figure 4 :: une vue en perspective du dessous du corps de valve ;
- Figure 5 :: une vue en coupe et en perspective du corps de valve de la figure 4 ;
- Figure 6 :: une vue en perspective de la membrane ;

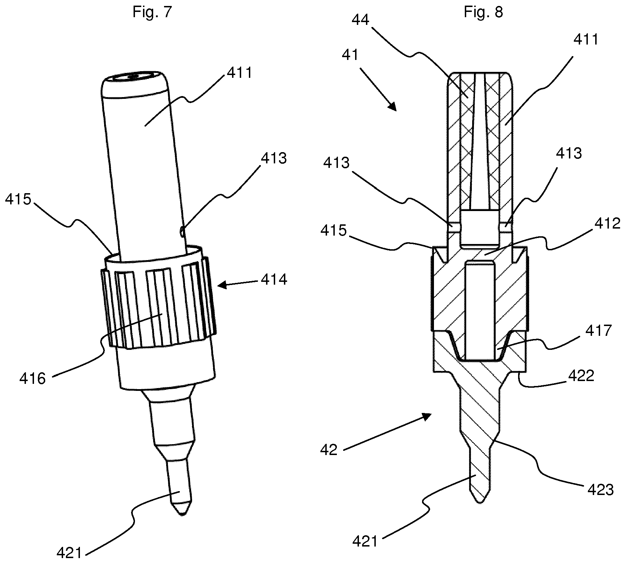

- Figure 7 :: une vue en perspective de la tige ;
- Figure 8 :: vue en coupe de la tige de la figure 7.

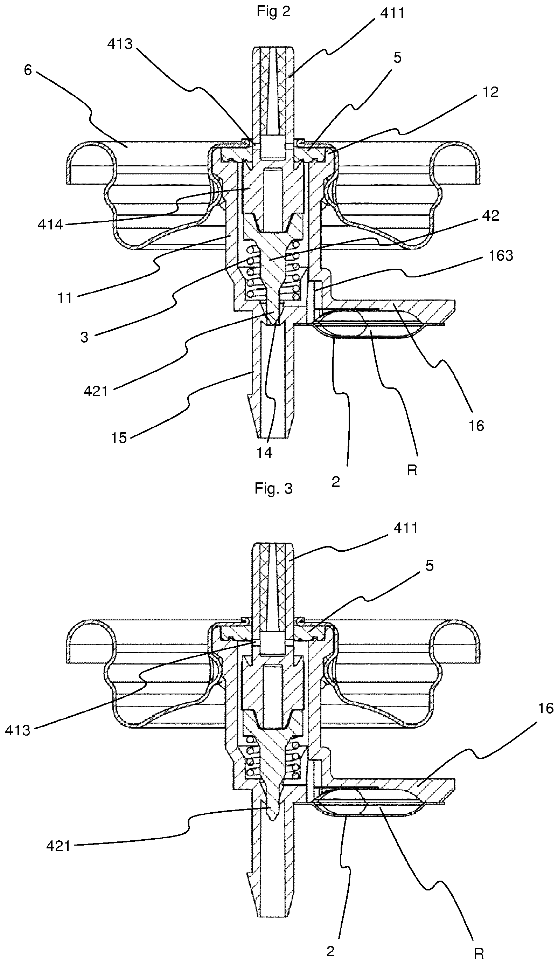

Pour des raisons de clarté de la description, il est fait appel à des références spatiales telles qu'« inférieur » et « supérieur » ou « haut » et « bas ». Ces références se rapportent à la valve telle que représentée sur la figure 2, avec l'ouverture de sortie dirigée vers le haut. Cela n'empêche pas que la valve puisse être utilisée dans une autre position. De plus, la majorité des pièces ont à l'exception de quelques éléments une symétrie de rotation autour de l'axe vertical passant par le centre de la tige et du corps de valve. Les adjectifs « axial » ou « radial » se rapportent à cet axe de symétrie vertical.

La valve de l'invention se compose essentiellement d'un corps de valve (1), d'une membrane (2), d'un ressort (3), d'un ensemble tige/embout (4), d'un joint interne (5) et d'une coupelle (6).

Cette valve est destinée en premier lieu à équiper des aérosols sous pression d'un gaz comprimé, notamment de l'air comprimé. Dans de tels récipients, la pression initiale est comprise en général entre 8 et 10 bars et descend en fin de vie vers 2 bars.

La coupelle (6), le joint interne (5) et le ressort (3) sont des pièces courantes utilisées pour les valves connues. Elles ne seront pas décrites plus en détail.

La valve de l'invention se distingue des valves connues par un réservoir latéral (R) intégré au corps de valve et par une aiguille (421) qui vient obstruer l'ouverture d'entrée (14) du corps de valve lorsque la valve est ouverte.

Le corps de valve (1) est très proche des corps de valve communs. Il comprend notamment une partie principale (11) sensiblement cylindrique formant une chambre interne (17) à l'intérieur de laquelle prend place l'ensemble tige/embout (4) en appui sur le ressort (3). L'extrémité supérieure de cette partie principale forme une couronne (12) légèrement plus large que le reste de la partie principale et autour de laquelle la coupelle est dudgeonnée au niveau de sa partie centrale (61). L'extrémité inférieure de la partie principale est fermée par une paroi radiale (13) traversée en son centre par une ouverture de passage (14). La partie principale se prolonge vers le bas de façon connue par une tubulure (15) sur laquelle peut être fixé un tube plongeur (non représenté) permettant d'atteindre le fond du flacon. L'ouverture de passage (14) met en contact l'intérieur de la tubulure (15) et la chambre interne (17) de la partie principale (11). Elle est de préférence tronconique, de sorte qu'elle est plus large du côté de la chambre interne (17) que de la tubulure (15).

Le corps de valve de l'invention se distingue des corps de valve connus par la présence d'un réservoir latéral (R). Ce réservoir est constitué d'une part d'une paroi rigide concave (16) saillant latéralement du corps de valve et d'une membrane souple (2) fixée par son bord périphérique (21) au bord périphérique (161) de la paroi rigide. Un canal de communication (163) met en contact la chambre interne (17) du corps de valve et l'intérieur du réservoir (R). Pour cela, le canal de communication débouche d'un côté dans le fond de la paroi rigide concave (16) et de l'autre dans la chambre interne (17). Dans l'exemple présenté, il débouche dans le bas de la chambre interne (17). Cela permet de disposer la paroi rigide (16) du réservoir le plus bas possible. Ainsi, il reste suffisamment de place entre la coupelle (6) et la paroi rigide (16) du réservoir, notamment pour dudgeonner la coupelle. Il serait cependant possible de faire déboucher le canal en un point plus haut.

La membrane (2) a de préférence la forme inverse de la cavité (162) de la paroi rigide. Ainsi, elle peut être écrasée par la pression régnant à l'intérieur du récipient contre la paroi concave en en tapissant le fond.

Selon l'invention quelques rainures (164) sont prévues dans le fond de la cavité de la paroi rigide. Ces rainures s'étendent depuis l'arrivée du canal de communication (163) en direction du bord périphérique de la cavité. Les différentes rainures (164) s'écartent du canal de communication en formant une étoile. Ainsi, lorsque la membrane est plaquée contre la paroi concave (16), il ne risque pas de se former des poches sans accès au canal de communication (163). En plus ou à la place des rainures réalisées dans le fond de la cavité, il est possible de réaliser des rainures sur la face de la membrane dirigée vers la paroi rigide (16).

L'ensemble tige/embout (4) est constitué de deux éléments distincts, à savoir la tige à proprement parler (41) et un embout (42) terminé par une aiguille (421). Il va de soi que les deux pièces pourraient former une pièce d'un seul tenant. L'avantage d'avoir deux pièces distinctes réside dans le fait qu'il est possible d'utiliser des tiges (41) communes et de les équiper de l'embout (42) lorsqu'elles sont destinées à une valve selon l'invention.

La tige (41) est constituée dans sa partie supérieure d'une partie tubulaire (411) ouverte à son extrémité supérieure et fermée à son extrémité inférieure par une paroi de fond radiale (412). Un ou plusieurs orifices de sortie (413), de préférence orientés radialement, sont prévus dans le bas de la partie tubulaire, à proximité de la paroi de fond. Dans l'exemple présenté ici, il y en a deux. Ces orifices mettent en contact l'intérieur de la partie tubulaire (411) avec l'extérieur. La partie tubulaire (411) se prolonge vers le bas par une deuxième partie (414) essentiellement cylindrique. L'extrémité supérieure de la deuxième partie forme une couronne annulaire (415) saillant vers le haut et dont le diamètre est supérieur à celui de la première partie tubulaire (411). Le sommet de la couronne se situe plus bas que les orifices de sortie (413). Pour faciliter le passage du produit le long de la tige, celle-ci est munie sur sa surface de nervures (416) verticales s'étendant de l'extrémité inférieure de la deuxième partie jusqu'à la base de la couronne (415). Pour économiser de la matière, il est possible, comme c'est le cas dans l'exemple présent, d'évider le centre de la deuxième partie de la tige. La deuxième partie se termine par un tenon (417) d'emboîtement sur lequel peut s'emboîter l'embout (42).

Dans l'exemple présenté ici, il y a un insert (44) à l'intérieur de la partie tubulaire (411). Cet insert a pour fonction de réduire le diamètre de sortie et d'améliorer la formation du spray. Ici encore, il s'agit d'utiliser une tige commune et d'avoir la possibilité de réduire les volumes morts à l'intérieur de la valve.

L'embout (42) est constitué d'un élément cylindrique se terminant par une aiguille (421). Il présente dans sa partie supérieure un évidement de forme complémentaire, ou pour le moins compatible, à celle du tenon d'emboîtement (417). Son diamètre diminue progressivement et par marches pour finir par l'aiguille (421). L'épaulement radial (422) constitué par la première marche sert d'appui au ressort (3). L'épaulement (423) constitué par la deuxième marche sert de butée pour empêcher l'embout de pénétrer trop avant dans l'ouverture de passage (14). Ce deuxième épaulement est tronconique tout comme l'est l'ouverture de passage. Ainsi, l'embout peut être enfoncé dans l'ouverture de passage au maximum jusqu'à ce que le deuxième épaulement (423) vienne en butée contre la paroi radiale (13) ou l'ouverture tronconique (14). Il va de soi qu'il serait également possible que le deuxième épaulement soit radial plutôt que tronconique, de sorte que l'embout viendrait en butée avec ce deuxième épaulement contre la paroi radiale (13).

Le diamètre de l'aiguille (421) et celui de l'ouverture de passage (14) du corps de valve sont choisis de telle sorte que l'aiguille peut pénétrer dans l'ouverture de passage en la bouchant de façon étanche lorsque la tige est enfoncée contre l'effet du ressort (3), mais peut ressortir de cette ouverture de passage sous l'effet du ressort lorsque la pression exercée sur la tige cesse, libérant ainsi l'ouverture de passage (14).

Lorsque la valve est montée, la membrane (2) est fixée de façon étanche à la paroi concave (16) en formant le réservoir (R), par exemple par soudage de leurs bords latéraux respectifs (21,161). L'ensemble tige/embout (4) est placé à l'intérieur de la chambre interne (17) du corps de valve, l'aiguille (421) dirigée vers l'ouverture de passage (14). Le ressort (3) est interposé entre le premier épaulement (422) de l'embout et la paroi radiale (13) du corps de valve de sorte à repousser l'ensemble tige/embout (4) en position haute. Le joint interne (5) est placé au sommet de la couronne (12) du corps de valve et la partie tubulaire (411) de la tige passe à travers l'ouverture de la partie centrale (61) de la coupelle et l'ouverture centrale du joint interne (5). L'ouverture centrale du joint (5) enserre de façon étanche la partie tubulaire (411) de la tige tout en lui laissant la possibilité de coulisser. La coupelle est dudgeonnée autour de la couronne (12) du corps de valve de sorte que le joint interne (5) assure l'étanchéité entre la coupelle (6) et le corps de valve (1) et entre la face externe de la valve et la chambre interne (17). Toute la face de la valve située en dessous de la coupelle (6), c'est-à-dire notamment la face interne de la coupelle, la surface externe du corps de valve (1), constitue la face interne de la valve destinée à être placée à l'intérieur du récipient aérosol. La face de la valve située au-dessus de la coupelle, c'est-à-dire entre autres la face externe de la coupelle et la surface externe de la partie tubulaire (411) de la tige saillant au-dessus du joint interne (5), constitue la face externe de la valve destinée à être placée hors du récipient aérosol.

La valve de l'invention fonctionne de la façon suivante. En position de repos, c'est-à-dire lorsque la valve est fermée, le ressort repousse l'ensemble tige/embout (4) vers le haut. Les ouvertures de sortie (413) de la tige se situent en face du joint interne (5) ou au-dessus de celui-ci. L'aiguille (421) se trouve hors de l'ouverture de passage (14), au-dessus de celle-ci. La couronne annulaire (415) de la tige est en appui contre le joint interne (5). Il a donc un passage entre l'intérieur de la tubulure (15) et le réservoir (R) via l'ouverture de passage (14), la chambre interne (17) du corps de valve et le canal de communication (163). Par contre, il n'y a pas de contact entre la chambre interne (17) du corps de valve et l'intérieur de la partie tubulaire (411) de la tige, d'une part car la couronne annulaire (415) est en appui sur le joint interne (5) et d'autre part, car les ouvertures de sortie (413) sont en face du joint interne (5) ou au-dessus de celui-ci. C'est la situation représentée sur la figure 2. Sous l'effet de la pression régnant dans le récipient (non représenté), le produit passe à travers la tubulure (15), l'ouverture de passage (14), la chambre interne (17), le canal de communication (163) et pénètre dans le réservoir (R). Le réservoir se remplit jusqu'à ce que la membrane (2) soit tendue.

Si une pression est exercée vers le bas sur la tige (41), celle-ci se déplace en entrainant l'embout (42). L'aiguille (421) pénètre dans l'ouverture de passage (14) du corps de valve en l'obstruant de façon étanche. La couronne annulaire (415) s'écarte du joint interne (5) et les ouvertures de sortie (413) passent en dessous de ce dernier (5). La chambre interne (17) et par conséquent le réservoir (R) sont ainsi isolés de l'intérieur du récipient du fait de l'obstruction étanche de l'ouverture de passage (14) par l'aiguille (421). Par contre, l'intérieur de la chambre interne (17), et par conséquent le réservoir (R) sont en contact avec l'extérieur via l'espace annulaire situé entre la paroi de la partie principale du corps de valve et la partie cylindrique (414) de la tige, les ouvertures de sorties (413) et l'intérieur de la partie tubulaire (411). C'est la situation représentée à la figure 3. En raison de la différence de pression entre l'intérieur du réservoir soumis à un gaz comprimé et l'extérieur de la valve, à pression atmosphérique, la membrane (2) est repoussée contre la paroi concave (16) en expulsant le produit par le canal de communication (163). Grâce aux rainures (164), on est sûr que l'ensemble du produit contenu dans le réservoir est refoulé en direction du canal de communication (163). Le produit expulsé du réservoir dans la chambre interne (17) pousse le produit contenu dans celle-ci en direction des ouvertures de passage (413), de la partie tubulaire (411) et de l'extérieur de la valve.

Étant donné que la membrane (2) est soumise à la pression du gaz comprimé, elle n'a pas besoin d'être élastique, il suffit qu'elle soit souple. Il est donc possible de choisir un matériau qui est à la fois facile à souder au corps de valve et compatible avec le produit contenu dans l'aérosol. On pourra notamment choisir des laminés d'aluminium, tels que ceux utilisés pour les poches souples des valves à poche. Il va de soi, qu'il serait bien sûr possible d'utiliser des membranes élastiques, notamment en élastomère s'il n'y a pas d'incompatibilité avec le produit à appliquer. De façon privilégiée, le corps de valve est réalisé en polypropylène (PP) ou en polyéthylène (PE), la membrane présente une surface interne compatible en terme de soudure avec le corps de valve, la tige et l'embout sont en polyoxyméthylène (POM), en polyamide (PA) ou en nylon.

Bien que la paroi rigide (16) et la membrane (2) soient sensiblement radiales dans l'exemple présenté ici, il serait également possible qu'elles soient inclinées par rapport à l'horizontale.

De même, il est possible de prévoir que la paroi rigide (16) constitue une pièce à part entière, distincte du reste du corps de valve. Pour un même corps de valve, il est alors possible de prévoir différents jeux de parois rigides/membranes de tailles différentes. Avec un même modèle de corps de valve, il est possible de réaliser différentes valves doseuses de volumes différents. La paroi rigide et la membrane peuvent être fixées au corps de valve par tout moyen approprié, tel que soudage, encliquetage, surmoulage, etc.

L'invention présente plusieurs avantages. D'une part, le choix du matériau pour la membrane (2) est très vaste puisqu'il suffit que celui-ci soit souple, sans nécessairement être élastique. Il est donc facile de l'adapter en fonction du produit contenu dans le réservoir.

D'autre part, le volume du réservoir (R) peut être facilement adapté au besoin. Il est possible dans une certaine mesure de faire varier la hauteur du réservoir. Il est également possible de faire varier la section de la cavité (162) et de la membrane (2). Dans l'exemple présenté ici, la paroi rigide concave (16) a la forme d'un haricot. Mais il est possible de lui donner une forme présentant une plus petite surface, ou au contraire une surface plus importante. Il est notamment possible que la paroi concave (16), et donc aussi la membrane (2), fassent le tour complet du corps de valve de sorte que le réservoir ait une forme annulaire. Dans ce cas, on peut prévoir plusieurs canaux de communication (163). La surface soumise à la pression du gaz comprimé est donc très importante par rapport au volume. Par conséquent, même lorsque la pression est faible en fin de vie de l'aérosol, par exemple 2 bars, il est tout de même possible d'obtenir un spray bien formé, sans gouttelettes.

Enfin, du début à la fin de chaque prélèvement, la surface soumise à la pression du gaz comprimé reste la même. Le spray émis est donc constant durant tout le prélèvement. Il ne risque pas de se former des gouttelettes à la fin des prélèvements.

La présente valve peut être adaptée pour être munie d'une poche interne afin de séparer le produit à extraire du gaz sous pression. Le réservoir (R) peut être placé à l'intérieur de la poche ou au contraire à l'extérieur.

### Liste des références :

- 1: Corps de valve
11 Partie principale
12 Couronne
13 Paroi radiale
14 Ouverture de passage
15 Tubulure
16 Paroi rigide concave
161 Bord périphérique
162 Cavité
163 Canal de communication
164 Rainures
17 Chambre interne
- 2: Membrane
21 Bord périphérique
- 3: Ressort
- 4: Ensemble tige/embout
41 Tige
411 Partie tubulaire
412 Paroi de fond
413 Ouvertures de sortie
414 Partie cylindrique
415 Couronne
416 Nervures
42 Embout
421 Aiguille
422 Premier épaulement
423 Deuxième épaulement
- 5: Joint interne
- 6: Coupelle
61 Partie centrale
R Réservoir

## Revendications

1. Valve doseuse pour récipient aérosol, présentant une face interne destinée à être placée à l'intérieur du récipient aérosol et une face externe destinée à être placée hors du récipient aérosol, laquelle valve est munie
- d'un corps de valve (1) présentant une chambre interne (17) pouvant être mise en contact soit avec la face interne de la valve, soit avec la face externe de la valve,
- d'une tige (4) munie de moyens de fermeture (421) et placée en partie à l'intérieur de la chambre interne (17) mobile entre deux positions, à savoir une position fermée dans laquelle la chambre interne est en contact avec la face interne de la valve, mais isolée de la face externe de la valve, et une position ouverte dans laquelle la chambre interne est en contact avec la face externe de la valve, mais isolée de la face interne de la valve,
- d'un réservoir (R) pouvant être rempli lorsque la tige est en position fermée et vidé lorsque la tige est en position ouverte,
- le réservoir (R) étant situé du côté de la face interne de la valve, hors du corps de valve (1),
- le réservoir (R) étant en contact avec la chambre interne (17) du corps de valve (1),
- le réservoir (R) étant constitué d'au moins une membrane souple (2) et d'une paroi rigide (16) sur laquelle est fixée la membrane souple (2),
- la face de la paroi rigide (16) dirigée vers la membrane souple (2) et/ou la face de la membrane souple (2) dirigée vers la paroi rigide (16) présentant une cavité (162),
- un canal de communication (163) étant prévu dans le corps de valve (1) pour relier l'intérieur du réservoir (R) et la chambre interne (17),
**caractérisée en ce que**
des rainures (164) sont réalisées dans la face de la paroi rigide (16) dirigée vers la membrane souple (2) et/ou dans la face de la membrane souple (2) dirigée vers la paroi rigide (16), lesdites rainures (164) s'étendant depuis l'arrivée du canal de communication (163) en direction du bord périphérique de la cavité, et **en ce que**, les différentes rainures (164) s'écartent du canal de communication en formant une étoile.

2. Valve selon la revendication 1, **caractérisée en ce que** la paroi rigide (16) saille latéralement du corps de valve (1) et la membrane souple (2) est fixée par son bord périphérique (21) au bord périphérique (161) de la paroi rigide.

3. Valve selon l'une des revendications précédentes, **caractérisée en ce que** la paroi rigide (16) fait partie intégrante du corps de valve (1).

4. Valve selon l'une des revendications 1 à 2, **caractérisée en ce que** la paroi rigide (16) constitue une pièce distincte du corps de valve (1).

5. Valve selon l'une des revendications précédentes, **caractérisée en ce que** la membrane souple (2) a la forme inverse de la paroi rigide (16).

6. Valve selon l'une des revendications précédentes, **caractérisée en ce que** la membrane (2) est souple mais non élastique.

7. Valve selon l'une des revendications précédentes, **caractérisée en ce que** la membrane (2) est réalisée dans un film mono matière ou un film complexe multicouches, avec ou sans aluminium.

8. Valve selon l'une des revendications précédentes, **caractérisée en ce que** les moyens de fermeture (421) de la tige (4) sont placés sur un embout (42) formant une pièce distincte de la tige (41), les moyens de fermeture isolant la chambre interne (17) de la face interne de la valve lorsque la tige (41) est en position ouverte, et mettant en contact la chambre interne (17) et la face interne de la valve lorsque la tige (41) est en position fermée.

9. Valve selon la revendication précédente, **caractérisée en ce que** la chambre interne (17) et la face interne de la valve sont en contact via une ouverture de passage (14), et **en ce que** les moyens de fermeture de l'embout (42) sont constitués par une aiguille (421) dimensionnée pour pénétrer dans l'ouverture de passage (14) lorsque la tige (41) est en position ouverte en fermant de façon étanche l'ouverture de passage (17).

10. Valve selon l'une des revendications précédentes **caractérisée en ce que** le canal de communication (163) débouche dans la chambre interne à proximité de l'ouverture de passage (14).

## Patentansprüche

1. Dosierventil für Aerosolbehälter, mit einer Innenseite, die zum Einbringen in den Innenbereich des Aerosolbehälters bestimmt ist, und einer Außenseite, die zum Einbringen außerhalb des Aerosolbehälters bestimmt ist, welches Ventil versehen ist mit
- einem Ventilkörper (1) mit einer Innenkammer (17), die entweder mit der Innenseite des Ventils oder mit der Außenseite des Ventils in Kontakt gebracht werden kann,
- einem Stem (4), der mit Schließmitteln (421) versehen ist und der teilweise innerhalb der Innenkammer (17) zwischen zwei Positionen beweglich angeordnet ist, nämlich einer geschlossenen Position, in der die Innenkammer in Kontakt mit der Innenseite des Ventils steht, aber von der Außenseite des Ventils isoliert ist, und einer offenen Position, in der die Innenkammer in Kontakt mit der Außenseite des Ventils steht, aber von der Innenseite des Ventils isoliert ist,
- einem Reservoir (R), das gefüllt werden kann, wenn sich der Stem in der geschlossenen Position befindet, und entleert werden kann, wenn sich der Stem in der geöffneten Position befindet,
- wobei das Reservoir (R) auf der Seite der Innenseite des Ventils außerhalb des Ventilkörpers (1) angeordnet ist,
- wobei das Reservoir (R) in Kontakt mit der Innenkammer (17) des Ventilkörpers (1) steht,
- wobei das Reservoir (R) aus mindestens einer flexiblen Membran (2) und einer starren Wand (16) besteht, an der die flexible Membran (2) befestigt ist,
- wobei die der flexiblen Membran (2) zugewandte Seite der starren Wand (16) und/oder die der starren Wand (16) zugewandte Seite der flexiblen Membran (2) einen Hohlraum (162) aufweist,
- wobei ein Kommunikationskanal (163) in dem Ventilkörper (1) vorgesehen ist, um das Innere des Reservoirs (R) und die Innenkammer (17) zu verbinden,
**dadurch gekennzeichnet, dass**
Nuten (164) in der Seite der der flexiblen Membran (2) zugewandten starren Wand (16) und/oder in der Seite der der starren Wand (16) zugewandten flexiblen Membran (2) ausgebildet sind, wobei sich die Nuten (164) von der Einmündung des Kommunikationskanals (163) in Richtung der Umfangskante des Hohlraums erstrecken, und dass die einzelnen Nuten (164) sich vom Kommunikationskanal durch Bildung eines Sterns weg erstrecken.

2. Ventil nach Anspruch 1, **dadurch gekennzeichnet, dass** die starre Wand (16) seitlich aus dem Ventilkörper (1) herausragt und die flexible Membran (2) mit ihrem Umfangsrand (21) an der Umfangskante (161) der starren Wand befestigt ist.

3. Ventil nach einem der vorstehenden Ansprüche, **dadurch gekennzeichnet, dass** die starre Wand (16) ein integraler Bestandteil des Ventilkörpers (1) ist.

4. Ventil nach einem der Ansprüche 1 bis 2, **dadurch gekennzeichnet, dass** die starre Wand (16) ein vom Ventilkörper (1) getrenntes Teil ist.

5. Ventil nach einem der vorstehenden Ansprüche, **dadurch gekennzeichnet, dass** die flexible Membran (2) die umgekehrte Form der starren Wand (16) aufweist.

6. Ventil nach einem der vorstehenden Ansprüche, **dadurch gekennzeichnet, dass** die Membran (2) flexibel, aber nicht elastisch ist.

7. Ventil nach einem der vorstehenden Ansprüche, **dadurch gekennzeichnet, dass** die Membran (2) aus einem Film aus einem einzigen Werkstoff oder einem komplexen Mehrschichtfilm mit oder ohne Aluminium hergestellt ist.

8. Ventil nach einem der vorstehenden Ansprüche, **dadurch gekennzeichnet, dass** die Schließmittel (421) des Stems (4) auf einem Endstück (42) angeordnet sind, das ein vom Stem (41) getrenntes Teil ist, wobei die Schließmittel die Innenkammer (17) von der Innenseite des Ventils isolieren, wenn sich der Stem (41) in der offenen Position befindet, und die Innenkammer (17) und die Innenseite des Ventils miteinander in Kontakt bringen, wenn sich der Stem (41) in der geschlossenen Position befindet.

9. Ventil nach dem vorhergehenden Anspruch, **dadurch gekennzeichnet, dass** die Innenkammer (17) und die Innenseite des Ventils über eine Durchgangsöffnung (14) in Kontakt stehen, und dass die Schließmittel des Endstücks (42) aus einer Nadel (421) bestehen, die so bemessen ist, dass sie in die Durchgangsöffnung (14) eindringt, wenn sich der Stem (41) in der geöffneten Position befindet und die Durchgangsöffnung (17) verschließt.

10. Ventil nach einem der vorstehenden Ansprüche, **dadurch gekennzeichnet, dass** der Kommunikationskanal (163) in die Innenkammer in der Nähe der Durchgangsöffnung (14) mündet.

## Claims

1. Metering valve for an aerosol container, having an internal face intended to be placed inside the aerosol container and an external face intended to be placed outside the aerosol container, said valve being provided with
- a valve body (1) having an internal chamber (17) able to be put in contact either with the internal face of the valve or with the external face of the valve,
- a stem (4) provided with closure means (421) and placed partly inside the internal chamber (17) able to move between two positions, namely a closed position in which the internal chamber is in contact with the internal face of the valve, but isolated from the external face of the valve, and an open position in which the internal chamber is in contact with the external face of the valve but isolated from the internal face of the valve,
- a reservoir (R) able to be filled when the stem is in the closed position and emptied when the stem is in the open position,
- the reservoir (R) being situated on the side of the internal face of the valve, outside the valve body (1),
- the reservoir (R) being in contact with the internal chamber (17) of the valve body (1),
- the reservoir (R) consisting of at least one flexible membrane (2) and of a rigid wall (16) on which the flexible membrane (2) is fixed,
- the face of the rigid wall (16) directed towards the flexible membrane (2) and/or the face of the flexible membrane (2) directed towards the rigid wall (16) having a cavity (162),
- a communication channel (163) being provided in the valve body (1) for connecting the inside of the reservoir (R) and the internal chamber (17),
**characterised in that.**
grooves (164) are provided in the face of the rigid wall (16) directed towards the flexible membrane (2) and/or in the face of the flexible membrane (2) directed towards the rigid wall (16), said grooves (164) extending from the inlet of the communication channel (163) in the direction of the peripheral edge of the cavity, and **in that** the various grooves (164) diverge from the communication channel while forming a star.

2. Valve according to claim 1, **characterised in that** the rigid wall (16) projects laterally from the valve body (1) and the flexible membrane (2) is fixed by its peripheral edge (21) to the peripheral edge (161) of the rigid wall.

3. Valve according to one of the preceding claims, **characterised in that** the rigid wall (16) forms an integral part of the valve body (1).

4. Valve according to one of claim 1 to 2, **characterised in that** the rigid wall (16) constitutes a piece distinct from the valve body (1).

5. Valve according to one of the preceding claims, **characterised in that** the flexible membrane (2) has the opposite shape to the rigid wall (16).

6. Valve according to one of the preceding claims, **characterised in that** the membrane (2) is flexible but non-elastic.

7. Valve according to one of the preceding claims, **characterised in that** the membrane (2) is produced from a single-material film or a multilayer complex film, with or without aluminium.

8. Valve according to one of the preceding claims, **characterised in that** the closure means (421) of the stem (4) are placed on an end piece (42) forming a piece distinct from the stem (41), wherein the closure means (421) isolate the internal chamber (17) from the internal face of the valve when the stem (41) is in the open position, and put the internal chamber (17) and the internal face of the valve in contact when the stem (41) is in the closed position.

9. Valve according to the preceding claim, **characterised in that** the internal chamber (17) and the internal face of the valve are in contact via a passage opening (14), and **in that** the closure means of the end piece (42) consist of a needle (421) sized so as to enter the passage opening (14) when the stem (41) is in the open position while sealingly closing the passage opening (17).

10. Valve according to one of the preceding claims, **characterised in that** the communication channel (163) emerges in the internal chamber close to the passage opening (14).
